# EUROPEAN PATENT APPLICATION

(11) **EP 1 534 011 A1**
(43) Date of publication of application: **25.05.2005**
(21) Application number: 04030826.4
(22) Date of filing: 24.08.2000
(51) Int. Cl.: H04N 7/167, H04N 7/173, H04N 7/16

(54) **System and method for securing on-demand delivery of pre-encrypted content using ECM suppression**

(30) Priority: 24.08.1999 US 150360 P
(62) Divisional of application: 00959344.3
(71) Applicant: General Instrument Corporation, Horsham, Pennsylvania 19044 (US)
(72) Inventor: So, Nicol, Chung, Pang, Bensalem PA 19020 (US)
(74) Representative: Cooper, John

(57) **Abstract**

A video-on-demand service is facilitated by encrypting, before purchase requests by subscribers, content such as a movie in accordance with one or a series of control words protected by a program key. The transport mechanism for delivery is an MPEG compliant transport mechanism, and the program key is encrypted and contained in an entitlement control message (ECM). The ECMs are transmitted to the set-top terminal associated with the subscriber for a limited time defining a service acquisition window. Thereafter, transmission of some or all ECMs are suppressed. This reduces the likelihood that an unauthorized terminal will intercept the ECM containing the program key, which is needed to descramble the content.

## Description

### RELATED APPLICATIONS

This application claims the benefit of U.S. provisional application no. 60/150,360 filed 8/24/1999, herein incorporated by reference in its entirety.

### FIELD OF THE INVENTION

This invention relates generally to conditional access systems, and, more particularly, to a system and method for securing on-demand delivery of pre-encrypted by suppressing the transmission of entitlement control messages.

### BACKGROUND OF THE INVENTION

Currently there are known conditional access mechanisms that are adapted to ensure the secure delivery of content (*e.g.*, an audiovisual program) to an *authorized* subscriber's terminal and to protect the content against access by all others (*i.e.,* against piracy). Such mechanisms are taught by Wool (EP 0 899 956), "Encipherment and Conditional Access," by Guillou et al., and "Functional Model of a Conditional Access System," EBU Project Group B/CA. Reducing or eliminating piracy and/or signal theft not only benefits a service provider's ongoing business, but also protects the copyright holder of the content. The importance of conditional access in contemporary cable and television distribution networks is therefore undeniable, as well as in other applications that may require conditional access (e.g., streaming media, Internet applications). For example, a content provider may be reluctant to provide content to a cable service provider that has no conditional access system in place, or only has one that can easily be compromised or defeated.

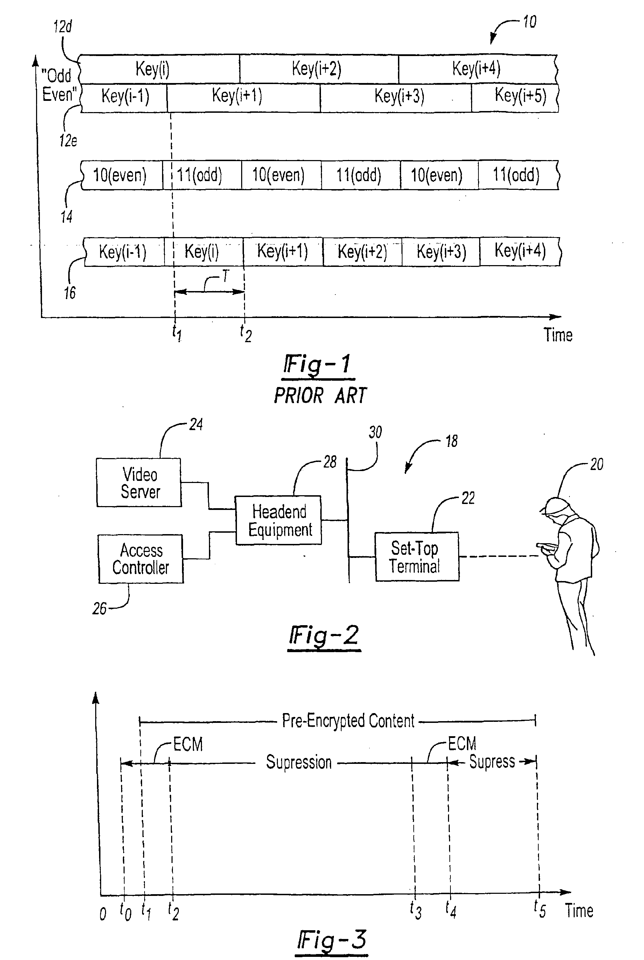

Figure 1 illustrates a known mechanism for implementing conditional access, as more fully set forth in "Guide To The Use Of The ATSC Digital Television Standard", Doc. A/54, 4 Oct. 1995. More specifically, Figure 1 shows a method for applying a series of cryptographic keys to protect a stream of packetized content by means of encryption. Such cryptographic keys are variably knows as control words (CW's), encryption keys, or scrambling keys. When such cryptographic keys are used in decryption, also called descrambling, they are also knows as decryption keys or descrambling keys. Figure 1 shows a an MPEG-2 transport scheme, shown generally at 10, for conditional access, which allows scrambling of data in the transport packets. To minimize piracy, the MPEG transport mechanism contemplates that control words will be changed every few seconds during the entire duration of an audiovisual program. Without the correct control words, the information received at the set-top terminal is unusable. Control words, in encrypted form, are transmitted in the transport bit stream for distribution to a receiver designed for conditional access, such as, for example, a set-top terminal. Depending on the time periods in which they are effective, control words are categorized as "odd" and "even". This is shown as control word streams 12_{E} and 12_{O} in Figure 1. In the MPEG-2 transport scheme, each transport packet includes a header, which includes a two-bit scrambling control field. According to customary usage, the value of this field is "10" when the packet is scrambled with an "even" control word, and "11" when the packet is scrambled using an "odd" control word. The control fields 14 associated with a stream of MPEG transport packet headers is also shown in Figure 1. Particular "even" and "odd" control words used to descramble the corresponding audiovisual program are indicated at 16 in Figure 1. Note that a control word is distributed in advance of the time it is needed, to allow for reception and decryption, as known. In Figure 1, for example, "even" key(I+1) is transmitted for the first time at time t₁ and is needed at time t₂. This leaves a time interval T to receive the control word, usually encrypted, and decrypt it before it must be used to descramble the scrambled audiovisual payload.

Conventionally, cryptographic keys, including control words, are sent to the set-top terminals by means of a class of control messages called entitlement control messages (ECMs). In addition, changing keys are generated in real time, which are then used to encrypt (scramble) the content in real-time. Based on the foregoing, it is necessary for an authorized set-top terminal to receive a substantially continuous stream of ECMs to properly descramble the scrambled content stream. While this approach has generally been satisfactory when the content is being *broadcast* to a large number of subscribers' set-top terminals, problems arise when the above-described approach is employed to protect a video-on-demand (VOD) service.

Several characteristics distinguish VOD-type services from conventional broadcast services. First, the subscriber is conventionally able to start viewing of the purchased content (*e.g.*, movie) at any time (*i.e.*, there is no pre-defined showing schedule). Second, the subscriber is often afforded VCR-like capabilities, such as "STOP", "REWIND", "PAUSE", and "FAST FORWARD". Finally, the subscriber is often allowed multiple viewings of the content within a time period, such as 24 hours. These and other features require that individual content streams be used for each purchase (*e.g.*, a plurality of different starting times alone require different streams). The requirement of individual streams is much different than the single content stream used in the broadcast model, where a program starts a predefined time and is broadcast as a single common stream to multiple set-top terminals. Each individual stream requires establishing a corresponding session between a video server, which streams the content, and the set-top terminal. At least two basic problems result.

The first problem relates to cost. Providing a large number of sessions requires a large number of encrypting devices to achieve the changing keys and real-time encryption of the content, to help enforce conditional access, as described above. Conventional real-time encrypting devices, while perhaps economical for use in the broadcast content distribution model, are less so for delivery of VOD services.

The second problem relates to space usage. For example, one piece of conventional encryption equipment may accommodate up to eight streams, corresponding to eight simultaneous sessions. To service the thousands of possible simultaneous VOD sessions in a typical cable television system, a large number of encrypting devices, perhaps in the hundreds, would be needed―the required space may make the implementation impractical.

In addition, any practical solution must consider existing set-top terminals and/or other conditional access receivers installed in subscriber homes, which may not have been designed specifically to facilitate VOD services. For example, as of mid 2000, various proprietary conditional access schemes have been deployed in over five million set-top terminals by the major cable equipment providers. Commercial considerations therefore require compatibility with the existing base of technology.

There is therefore a need to provide an improved method and system for flexible delivery of content to a subscriber that minimizes or eliminates one or more of the shortcomings set forth above.

### SUMMARY OF THE INVENTION

One advantage of the present invention is that it efficiently provides a basic measure of protection against unauthorized reception of valuable content, particularly when used for facilitating session-intensive services such as a video-on-demand service. The invention combines advance encryption ("pre-encryption") of the content with the provision of a limited-duration service acquisition window. Pre-encryption obviates the need for large amounts of real-time encryption equipment. Restricting delivery of the key to decode the encrypted content to a limited window reduces the probability that it could be intercepted by an unauthorized subscriber.

A method is provided for facilitating delivery, to a terminal or other receiver designed for receiving conditional access data, of content pre-encrypted according to a program-specific key or a series of program-specific keys. The method includes the step of suppressing transmission of some or all ECMs necessary for the computation of descrambling keys to the terminal after a predetermined service acquisition window. In a preferred embodiment, the method further includes the step of transmitting an encrypted program-specific key ("program key") to the terminal during the service acquisition window. In a still further preferred embodiment, a transport mechanism for facilitating the above-described delivery of content comprises a MPEG-2-compliant transport mechanism. The transmitting step involves respectively sending to the terminal an ECM, which carries the encrypted program key, during the service acquisition. In a still further preferred embodiment, a program key is used to decrypt an encrypted control word or a series of encrypted control words conveyed in a stream of ECMs.

In still another embodiment, the physical or logical channel on which the pre-encrypted content and ECM transmission occurs is "hidden" to the subscriber by way of the subscriber's conventional interface to the terminal (*e.g.*, through the "channel up" and '''channel down" buttons). This feature further reduces the probability that an unauthorized person will gain access to the program key to decode the pre-encrypted content by random by "surfing" through the channels.

In other aspects of the invention, a terminal or receiver having means for inhibiting access to the "hidden" channel and a controller for suppressing ECM transmission are also presented.

Other objects, features, and advantages of the present invention will become apparent to one skilled in the art from the following detailed description and accompanying drawings illustrating features of this invention by way of example, but not by way of limitation.

### BRIEF DESCRIPTION OF THE DRAWINGS

Figure 1 is an illustration of a prior art MPEG conditional access scheme, as it relates to the application of control words to encrypt packetized content;
Figure 2 is a block diagram view of a system for secure, on-demand delivery of pre-encrypted content according to the invention;
Figure 3 is a timing diagram view showing the relationship between transmission of pre-encrypted content, and the transmission of ECM's within a service acquisition window;
Figure 4 is a simplified block diagram of a set-top terminal according to the present invention; and
Figure 5 is a simplified flowchart of a method for facilitating secure delivery of pre-encrypted content according to the present invention.

### DETAILED DESCRIPTION OF THE PREFERRED EMBODIMENTS

Referring now to the drawings wherein like reference numerals are used to identify identical components in the various views, Figure 2 is a simplified block diagram of a cable television system 18 configured according to the present invention. System 18 is provided for facilitating delivery of pre-encrypted content (*e.g.*, a movie) to a subscriber 20 by way of a receiver designed for receiving conditional access data, such as set-top terminal 22. Although a set-top terminal 22 will be used as an example throughout the specification, the invention is not limited to use with set-top terminals and can be used with any conditional access data receiver. In one embodiment, the content is delivery as a so-called video-on-demand (VOD) service, as described in the Background. Figure 2 further shows a video server 24, an access controller 26, headend equipment 28 and cable plant 30.

Terminal 22 can be any receiver designed for conditional access, such as a set-top terminal, a digital television, or a host device capable of accepting a point-of-deployment (POD) security module, possibly taking the form of a suitably configured personal computer (PC). In a preferred embodiment, terminal 22 comprises a digital set-top terminal 22, having a capability of receiving and processing both analog and digital audiovisual signals, an example of the latter being an MPEG-2 transport stream. In general, the set-top terminal 22 is configured to process the messages that it receives (*e.g.*, ECMs which convey control words, access requirements, etc.), descramble encrypted content and generate a signal suitable for driving an attached display (not shown) so that subscriber 20 may perceive the content (e.g., audio and video), as well as to provide a suitable interface for using various network services, such as the VOD service.

Video server 24 is configured to provide content, such as audio, video, and audiovisual programming (*e.g.*, video clips, motion pictures, etc.) and the like. According to the invention, the content is preferably pre-encrypted in accordance with one or a series of control words, which are possibly protected by a program key by means of encryption. Since the content is pre-encrypted, it will not require any encryption resources when it is streamed to a requesting set-top terminal 22. The information provided by server 24 is provided preferably as digital data to headend equipment 28.

Access controller 26 is configured, generally, to generate the messages that control the conditional access scheme, including the inventive features of the present invention. While there are a plurality of different schemes, for purposes of description only and not limitation, system 18 may employ a hierarchy of keys to facilitate conditional access. For example, a master hardware key (not shown) may be associated with set-top terminal 22, and be unique to that terminal (*e.g.*, be linked to the set-top terminal serial number). The master key may be embedded at the time of manufacture and not changeable. The master key may be used to decode an encrypted intermediate-level key, herein referred to as an authorization key. The authorization key may, in-turn, be used directly or indirectly to decode one or more levels of intermediate keys, an example of which may be a program key as described previously. The intermediate keys allow the decryption or derivation of control words which are, in turn, used to decode scrambled content provided by video server 24. The authorization key may be renewed, for example, once a month (*e.g.*, when the subscriber 20 pays the cable bill). Conventionally, the authorization key may be delivered to a specific set-top terminal 22 or to a group of set-top terminals, in a class of control messages called entitlement management messages (EMMs). The EMM information stream identifies the programs/services that each subscriber 20 is entitled to access. Conventionally, authorization keys are valid until changed by a subsequent EMM. The above-mentioned program key may be sent in an ECM, which is addressed to one or a group of set-top terminals 22. ECMs are valid for pre-defined time periods, which may be variable and must be coordinated with the delivery of the associated scrambled content.

In a preferred embodiment, the content to be delivered to the subscriber is provided as a VOD service. All subscribers 20 that are authorized for this VOD service receive an appropriate EMM message that is generated by access controller 26 (based on information from a business computer system having subscription, billing and payment information- not shown). Then, for any particular session established for delivery content, an ECM (or ECMs) is sent by controller 26, in accordance with the invention, to the particular, set-top terminal 22 via headend 28. Alternatively, the ECM(s) may be sent to a group of set-top terminals 22 of which the particular set-top terminal 22 is a member. This ECM (or ECMs) contains an encrypted program key, which, when decrypted at set-top terminal 22, may be used to descramble the pre-encrypted content being streamed out by video server 24, by allowing the decryption or derivation of control words.

Controller 26 is also configured to generate various program specific information (PSI), such as program association tables (PAT) and program map tables (PMT), as known.

With continued reference to Figure 2, cable television (CATV) system headend equipment 28 is configured to perform a variety of conventional functions. One function may include a multiplexing function that generates a broadcast signal, having video, audio, and audiovisual services originating from video server 24. The resulting signals may be carried as a packetized digital transport stream conforming to, for example, the MPEG-2 standard.

Figure 3 is a timing diagram showing the relationship between the transmission of pre-encrypted content, and the transmission of an ECM containing an encrypted program key needed by set-top terminal 22 for the decryption or derivation of control words, and in turn, descrambling the encrypted content. The general principle of the present invention involves establishing a limited-duration service acquisition window within which the set-top terminal 22 may acquire the program key contained in an ECM. Thereafter, transmission of some or all types of ECMs is suppressed for the duration of the purchased content, in contrast to the conventional approach, shown in Figure 1, of substantially, continuously streaming ECMs to the set-top terminal 22. Restricting the duration of the window reduces the likelihood than an unauthorized person can intercept an ECM containing the one or more keys needed for descrambling. In a preferred embodiment, another feature which further reduces the likelihood of piracy and/or unauthorized reception involves prior authorization (*e.g.,* the above-described authorization key). It should be appreciated that in the described arrangement, descrambling pre-encrypted content requires the program key, whose acquisition in turn requires knowledge of the authorization key.

With continued reference to Figure 3, an initial service acquisition window is shown between times t₀ and t₂. During this window, a burst of ECMs is transmitted to terminal 22. Thereafter, transmission of some or all ECMs is suppressed, for example, between t₂ and t₃. The information whose transmission is being suppressed should remain unchanged during the suppression period. If information conveyed in multiple types of ECMs is required for successful descrambling, suppressing any single type of requisite ECM is sufficient, provided that the information conveyed is unchanged during the suppression period. The pre-encrypted content is shown as being streamed between times t₁ and t₅. The set-top terminal 22 must receive and decrypt the program key before the content can be descrambled. If the set-top terminal 22 is unable to acquire the program key, it will not thereafter be able to because subsequent transmissions of ECM are suppressed. In an alternate embodiment, the service acquisition window commences and ends before the pre-encrypted content is started to be streamed out to terminal 22. It should be understood that still further variations are possible. For example, the service acquisition window may end substantially at the beginning of the steaming of the pre-encrypted content, or, as shown in Figure 3, the service acquisition window may end after streaming of content has begun.

In addition, in a still further embodiment, whenever subscriber 20 has invoked functions of the set-top terminal 22 that would cause it to lose its record of the ECMs of a purchased content unit, and when the subscriber 20 attempts to later restart/resume play-out of the purchased content unit, the signaling scenario and limited-duration ECM transmission will be repeated, as shown in exemplary fashion between times t₃ and t₄. In this fashion, an authorized terminal 22 will be allowed to re-acquire service.

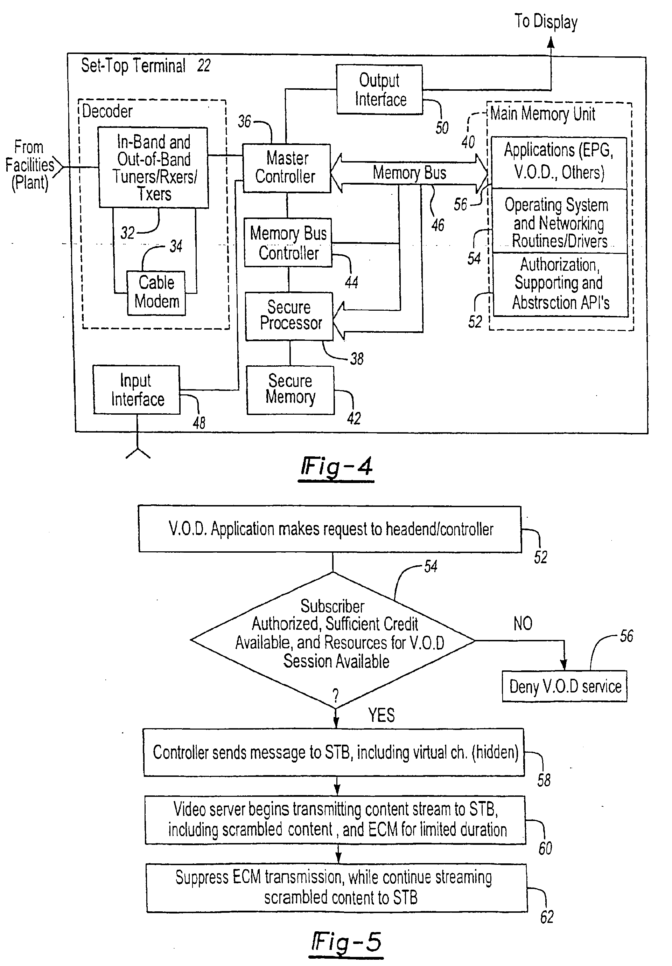

Figure 4 shows, in greater detail, an exemplary terminal 22 suitable for use in the present invention. Terminal 22 includes a decoder 30 comprising an in-band/out-of-band tuners 32, a first, master processor 36, a second, secure processor 38, a main memory unit 40, a secure memory 42, a memory bus controller 44 for controlling a memory bus 46, an input interface 48 and an output interface 50. A cable modem 34 is shown in the Figure 4, but any other means of upstream communication may be used in lieu thereof.

In-band tuner 32 is configured to receive the broadcast signal, tune and decode it as required, under the control of master processor 36, to recover the audio and video information for reproduction of the audiovisual service on a display (not shown) coupled to terminal 22. Cable modem 34 is also configured for upstream transmission, for example, to headend 28, which provides terminal 22 the capability to transmit requests for VOD service, to be described in greater detail hereinafter.

In the illustrated embodiment, terminal 22 includes two distinct processors. The first is a master processor 36 which may be, for example, a central processing unit. The master processor 36 is the processor which executes object code to perform the functions of terminal 22. The second processor is secure processor 38 that is used to determine whether the access requirements for a service, such as a VOD service match the authorization rights of the subscriber 20. The secure processor 38 also performs descrambling of encrypted packetized content.

Main memory unit 40 may be any combination and any form of volatile and nonvolatile, long-term electronic data storage device including, for example, an electronic memory device, a magnetic hard drive or an optical or magneto-optical disc drive. Volatile memory (not shown) is used for storage of non-persistent, working data. Memory unit 40 is configured to contain executable code configured to perform a plurality of functions. For example, main memory 40 may include code/objects 52 configured to perform authorization, and provide supporting and abstraction by means of application programming interfaces (APIs). Memory 40 may further include code/objects 54 corresponding to an operating system software and networking routines/drivers. Memory 40 may still further include code/object corresponding to application programs, such as an electronic program guide (EPG), a web browser, and, significantly, a VOD application.

The secure processor 38 has a connection to the memory bus 46 and thence to the memory unit 40. In addition, secure processor 38 also includes a connection to secure memory 42 that is inaccessible by master processor 36. Secure memory 42, in a preferred embodiment, is configured to store authorization (*i.e.* privileges) defining what services to which the subscriber has access.

The memory bus controller 44 may be provided to regulate the access to the memory bus 46 by the two processors 36, 38.

In an alternate embodiment, the master processor and secure processor functionality may be combined. Specifically, an alternative approach to the present invention, without employing two separate processors, is to have a secure software or firmware task running on the main processor 36 as a "background" task. Such a secure task could perform all the functions described above for the secure processor 38.

If the secure task can be carefully designed to resist being tampered with or subverted, then the use of a background secure task provides an efficient way to obtain many of two distinct processors.

Input interface 48 is configured to receive input, such as from subscriber 20. For example, input interface may communicate to master processor 36 the identity, and sequence of button depressions on a front panel of terminal 22, as well as the identification and sequence of preselected keys on a remote handheld control (not shown) that have been depressed. As an example, interface 48 may detect when a user depresses program channel up and program channel down keys.

Output interface 50 is configured to produce output signals suitable for generating a display and/or sound on an attached television, monitor, or the like, from a decrypted content stream.

With continued reference to Figure 4, the VOD application running on terminal 22 is configured to present an interface to the subscriber, when preselected events occur (*e.g.*, an on-screen display menu item is selected, or predesignated key on the remote is depressed). The VOD application may include a database of available options (*e.g.*, listing a movie titles, prices for each, etc.), which is presented to the subscriber for further selection. Alternatively, such information may be supplied by the access controller 26. Once a saleable unit of content, such as a movie, has been selected, the VOD application is further configured to transmit the request upstream, where it is processed by controller 26. If all authorization and resource availability conditions are met, a reply message is received by terminal 22 from the network over cable plant 30, which reply is forwarded to the application. The reply message will specify, in one embodiment, a virtual channel on which the ECMs, and the pre-encrypted content will transmitted. The specified virtual channel may be a so-called "hidden channel". The hidden channel cannot be tuned to by way the subscriber by mere actuation of the "channel up" and "channel down" keys. The only way to tune to the "hidden channel" is to receive a tune command as part of the above-described reply message. Accordingly, absent tampering with the set-top terminal 22, this feature presents another obstacle tending to minimize the unauthorized reception of the content. The set-top terminal 22 therefore includes means for inhibiting access, by way of the normal subscriber interface, to the "hidden" channel―the identified virtual channel on which the pre-encrypted content and the ECM are carried.

Referring now to Figure 5, a description of a method according to the invention will now be set forth. First, the content must be encrypted before delivery (*i.e.*, not real time encryption). Each individually saleable unit of content (e.g., a movie) is encrypted individually with one or a series of control words, preferably unique to that unit. The manner of encryption must be such that it would not be necessary for an authorized terminal, such as set-top terminal 22, to receive a complete, continuous stream of ECMs to decrypt the encrypted content stream. As described above, the ECMs are restricted to a time-limited window. The manner of pre-encryption should be such so as to allow the authorized terminal 22 to properly process (decrypt) the entire encrypted unit upon receipt of only a limited number of ECMs (e.g., 1 or 2). Alternatively, the manner of encryption may be such that a limited number of ECMs of one type, when combined with a continuous stream of ECMs of other types, allows the authorized terminal 22 to decrypt the entire encrypted content unit. Likewise, the encryption should be conducted so that terminals 22 which have not received a full set of proper ECMs should be unable to properly process (decrypt) the encrypted content unit.

The ECMs that would authorize terminals 22 to process (decrypt) a pre-encrypted unit may be stored as part of the encrypted unit itself on a content server such as video server 24.

When subscriber 20 purchases a content unit, the VOD application running on terminal 22 will signal a controller device, such as controller 26, in the headend about the requested purchase. This is shown as step 52 in Figure 5.

In step 54, the controller 26 determines whether the subscriber 20 is authorized to make the requested purchase, whether the subscriber 20 has sufficient credit remaining, and whether there are resources available (available session) to complete the transaction. If the answer is "NO", then the method proceeds to step 56, where the controller 26 sends message to terminal 22, particularly destined for the VOD application, that the requested transaction cannot be completed possibly with an explanation.

Otherwise, if the answer is "YES", then the method proceeds to step 58. In step 58, the controller sends a message to the set-top terminal, specifying a virtual channel-the "hidden channel"―that the terminal should tune to in order to receive the ECM containing the program key and the encrypted content. As understood by those of ordinary skill in the art, the specification of a virtual channel provides information, among other items, as to what radio frequency (RF) channel to tune to, and the particular MPEG-2 program number. In one embodiment, as is specified by the MPEG-2 standard, the correspondence between a program number, and the associated video, audio, and ECM PID numbers within a transport stream may be adjusted dynamically and conveyed to set-top terminal 22 via the generation and transmission of a message, called program map table (PMT), from the headend. The method then proceeds to step 60.

In step 60, the video server 24, at the direction of the controller, will begin to play out the pre-encrypted content from its local file. Server 24 preferably embeds in the content stream ECMs that are necessary for the decryption of the purchased content unit. This ECM transmission will allow terminal 22 acquire the needed program key, and thus the ability to decrypt or compute control words, and the ability to decrypt the content stream.

After a predetermined time has elapsed, the window terminates, and the transmission of some or all types of ECMs needed for service acquisition is discontinued. This suppression, which is shown as step 62, prevents other terminals from acquiring the same encrypted content unit. As described in connection with Figure 3, there may be instances where the server 24 initiates a second or subsequent ECM transmission in a corresponding second or subsequent window.

An approach for pre-encryption is provided in accordance with the present invention. A single-program transport stream (SPTS, also called a single-service transport multiplex) is created containing packet streams belonging to an individually saleable content unit, such as a movie. The SPTS may be output from a video encoder, a file server, or any other type of digital video editing equipment. The SPTS so generated is then fed into a transport encryption device. Devices of this type are known, and commercially available, for example, IRT (integrated receiver/transcoder) and MPS (modular processing system) families of products, available from General Instrument Corporation, Horsham, PA, USA. The transport encryption device is configured to encrypt the content in the manner described above. The transport encryption device inserts ECMs into a PID stream specified by a descriptor in the program map table (PMT) associated with the (only) program in the transport stream. The encrypted version of the content unit is recorded from the output of the transport encryption device for further processing in accordance with the invention, as described herein.

The foregoing is exemplary and not limiting in nature, modifications and variations are possible without departing from the spirit and scope of the invention, which are limited only by the appended claims. It should be understood that variations are possible. For example, there are other mechanisms to limit the duration of ECM transmission. One possible way is for the video (content) server to implement a packet filter to remove the PID streams carrying ECMs after an initial timeout period. If the ECMs are carried in the same PID stream as the PMT, this approach will suppress the two types of messages at the same time. In other words, the ECMs can be suppressed alone, or together with the PMTs. In a still further alternative, to prevent an unauthorized terminal from tricking the controller in the headend to cause ECMs to be transmitted when they should be suppressed, an authentication mechanism may be employed to verify the origin of the requests coming from the terminals. This can be done in software, hardware, or a combination of both.

## Claims

1. A terminal (22) configured to facilitate secure delivery of pre-encrypted content, comprising:
a network interface (32) configured to receive an ECM including an encrypted program key, said ECM and pre-encrypted content being carried in a program (a.k.a. service) within a transport stream corresponding to a virtual channel;
a transmitter (34) capable of sending information to a video-on-demand controller (26);
a secure processor (28) configured to decode said pre-encrypted content in accordance with one or a series of control words encrypted by said encrypted program key; and
a subscriber interface (48) responsive to subscriber (20) input for sequencing through audiovisual program channels, said subscriber interface (48) including means for inhibiting access to said virtual channel carrying said pre-encrypted content.

2. The terminal (22) of claim 1 further including an on-demand application configured to facilitate delivery of the pre-encrypted content, said on-demand application including means for enabling said terminal (22) access said virtual channel carrying said pre-encrypted content.

3. The terminal (22) of claim 1, further comprising means for requesting re-transmission of the ECM containing the encrypted program key during a subsequent service acquisition window.

4. The terminal (22) of claim 3 wherein said terminal (22) requests re-transmission when said terminal (22) loses record of the ECM received during said service acquisition window.

5. A terminal (22) configured to facilitate secure delivery of pre-encrypted content, comprising:
a network interface (32) configured to receive a message specifying a virtual channel that the terminal (22) should tune to in order to receive an entitlement control message (ECM) containing the encrypted program key and the pre-encrypted audiovisual service, said ECM and said pre-encrypted content being carried within a transport stream corresponding to a virtual channel;
a transmitter (34) capable of sending information to a video-on-demand controller (26); a secure processor (28) configured to decode said pre-encrypted content in accordance with one or a series of control words encrypted by said encrypted program key; and
a subscriber interface (48) responsive to subscriber (20) input for sequencing through audiovisual program channels, said subscriber interface (48) including means for inhibiting access to said virtual channel carrying said pre-encrypted content.

6. The terminal (22) of claim 5 further including a video-on-demand application configured to facilitate delivery of the pre-encrypted content, said video-on-demand application including means for enabling said terminal (22) access said virtual channel carrying said pre-encrypted content.

7. The terminal (22) of claim 5, further comprising means for requesting re-transmission of the ECM containing the encrypted program key during a subsequent service acquisition window,

8. The terminal (22) of claim 7 wherein said terminal (22) requests re-transmission when said terminal (22) loses record of the ECM received during said service acquisition window.
